Europäisches Patentamt

European Patent Office

Office européen des brevets

(11) Veröffentlichungsnummer: **0 494 442 B1**

## (12) EUROPÄISCHE PATENTSCHRIFT

(45) Veröffentlichungstag der Patentschrift: **23.11.94**

(51) Int. Cl.5: **C09D 167/06**

(21) Anmeldenummer: **91122154.7**

(22) Anmeldetag: **23.12.91**

(54) **Beschichtungsmittel und seine Verwendung zur Herstellung von Beschichtungen.**

(30) Priorität: **05.01.91 DE 4100204**

(43) Veröffentlichungstag der Anmeldung:
**15.07.92 Patentblatt 92/29**

(45) Bekanntmachung des Hinweises auf die
Patenterteilung:
**23.11.94 Patentblatt 94/47**

(84) Benannte Vertragsstaaten:
**AT BE CH DE ES FR GB IT LI NL SE**

(56) Entgegenhaltungen:
**EP-A- 0 137 256     DE-A- 2 550 156
DE-B- 2 621 657     DE-C- 3 046 409
US-A- 4 076 766     US-A- 4 968 775**

(73) Patentinhaber: **BAYER AG**

**D-51368 Leverkusen (DE)**

(72) Erfinder: **Höhlein, Peter, Dr.
Windmühlenweg 3 e
W-4152 Kempen 3 (DE)**
Erfinder: **Foster, Keith-Allen, Dr.
Josef-Werres-Strasse 48
W-4005 Meerbusch-Bösinghoven (DE)**

EP 0 494 442 B1

Rank Xerox (UK) Business Services
(3. 10/3.0 9/3.3.3)

**Beschreibung**

Die Erfindung betrifft ein neues flüssiges, lagerstabiles Beschichtungsmittel, welches sich zur Herstellung von hervorragend UV-stabilen Beschichtungen eignet, und dessen Bindemittel sich aus einer Härterkomponente, bestehend aus einem Aminoplastharz oder einem blockierten Polyisocyanat und einer speziellen Polyesterkomponente aus gesättigten und ungesättigten Bausteinen zusammensetzt und seine Verwendung zur Herstellung von Beschichtungen auf beliebigen hitzeresistenten Substraten.

Einkomponenten-Einbrennlacke auf Basis von Polyisocyanaten mit blockierten Isocyanatgruppen sowie ihre Verwendung in Polyurethanlacken sind bekannt (vgl. z.B. Kunststoff-Handbuch, Band VII, Polyurethane, Carl Hanser Verlag München (1966), Seiten 11 - 13, 21 ff.).

Für die Verwendung derartiger blockierter Polyisocyanate in Kombination mit Hydroxylpolyestern werden folgende Hauptanforderungen gestellt:

1) relativ niedrige Abspalttemperaturen bei möglichst kurzer Einbrenndauer,
2) keine oder nur geringe Vergilbung beim Einbrennen und kurzzeitigem Überbrennen,
3) ausreichende Lagerstabilität der Einkomponentenlacke,
4) keine Abspaltung toxikologisch bedenklicher Spaltprodukte.

Diese Anforderungen können durch spezielle Einbrennbindemittel auf Basis von Hydroxylpolyestern und blockierten Polyisocyanaten erfüllt werden, wie sie in DE-OS 2 550 156 beschrieben sind.

Der DE-PS 3 046 409 ist zu entnehmen, daß die Einbrennmittel der DE-OS 2 550 156 nicht zur Herstellung von Beschichtungen verwendet werden können, die Stoß- und Schlagbelastungen beim Schutz von Industriegütern wie z.B. Maschinenteilen, Fahrzeugkarrosserien oder Transportbehältern im Oberflächenbereich ausgesetzt sind.

Obwohl die Einbrennbindemittel der DE-PS 3 046 409 stoß- und schlagfeste Beschichtungen ergeben, können sie normalen Ansprüchen an die Wetterstabilität nicht genügen. Sie sind damit für die Beschichtung von Oberflächen, die extremen Witterungseinflüssen ausgesetzt sind, wie z.B. Automobilkarosserien, Fassadenelemente usw. und an die hohen Anforderungen an die mechanischen Eigenschaften und Belastbarkeit mit Lösemitteln, wie z.B. Benzin, gestellt werden, ungeeignet.

Aber auch Einkomponenten-Einbrennbindemittel auf Basis von Hydroxylpolyestern und Aminoplastharzen erfüllen die gestellten Anforderungen nur teilweise und führen nach dem Einbrennprozeß zu Lackfilmen, die sich durch ein günstiges Härte-/Elastizitäts-Verhältnis und gute Haftung auszeichnen. Solche Bindemittelkombinationen sind in der DE-AS 2 621 657 und in US-A-4 968 775 beschrieben und können nach der Technik der automatischen Bandbeschichtung appliziert werden. Die Anforderungen, die an Einkomponenten-Einbrennlacke auf Basis von Hydroxylpolyestern und blockierten Polyisocyanaten bzw. Aminoharzen als Vernetzerkomponente gestellt werden, gehen aber heute über das beschriebene Niveau hinaus. So werden für den Einsatz im Bereich der automatischen Bandbeschichtung Einbrennlacke gefordert, deren Bewitterungsverhalten so extrem hoch sein muß, daß die Lackfilme im pigmentierten Zustand auch kurzwelligem UV-Licht längere Zeit vergilbungs- und rißfrei bei hohen Glanzgraden der Lackfilmoberflächen standhalten müssen. Die mechanischen Eigenschaften dieser Beschichtungen dürfen dabei gegenüber dem jetzigen Stand der Technik keine Nachteile aufweisen. In Bezug auf die Abriebfestigkeit der Lackfilmoberfläche wird ein hohes Eigenschaftsniveau verlangt. Auch der verminderte Einsatz von Lösungsmitteln wird erwartet. Diesen Anforderungen werden die genannten Lacksysteme des Standes der Technik nicht vollauf gerecht.

Überraschenderweise wurde jetzt gefunden, daß die nachstehend näher beschriebenen Beschichtungsmittel auf Basis einer Härterkomponente der an sich bekannten Art und einer speziellen Polyesterkomponente Lackfilme ergeben, die nicht nur ein hohes Härte- und Elastizitätsniveau bei guter Haftung auf Metall und guter Abriebfestigkeit aufweisen, sondern darüber hinaus der Belastung mit kurzwelligem UV-Licht über einen Zeitraum von mehr als 1.250 h riß- und vergilbungsfrei ohne Zusatz von Lichtschutzmitteln standhalten. Nach dem Einbrennvorgang resultieren aus den erfindungsgemäßen Beschichtungsmitteln hochglänzende Lackfilme, die neben einer ausgezeichneten Haftung auf metallischen Untergründen eine hohe Härte und extreme Verformbarkeit aufweisen. Die letztgenannte Eigenschaft ist insbesondere bei solchen Überzugsmitteln erwünscht, die mittels automatischer Bandbeschichtungsverfahren appliziert werden oder aber als Steinschlagschutzbeschichtung im Bereich des Automobilbaues dienen.

Die erfindungsgemäßen Beschichtungsmittel lassen sich in hoher Konzentration applizieren und ermöglichen eine Reduzierung der Umweltbelastung aufgrund eines vergleichsweise niedrigen Lösungsmitteleinsatzes.

Gegenstand der Erfindung ist ein bei Raumtemperatur lagerstabiles flüssiges Beschichtungsmittel, bestehend im wesentlichen aus einem Bindemittelgemisch, organischen Lösungsmitteln und gegebenenfalls den aus der Lacktechnologie üblichen Hilfs- und Zusatzmitteln, wobei das Bindemittel ein Gemisch darstellt aus

2

A) 2,5 - 40 Gew.-%, bezogen auf die Summe der Komponenten A) und B), einer Vernetzerkomponente, bestehend aus mindestens einem Aminoplastharz und/oder mindestens einem blockierten Polyisocyanat, und

B) 97,5 - 60 Gew.-%, bezogen auf die Summe der Komponenten A) und B), einer Polyesterkomponente, bestehend aus mindestens einem hydroxyl- und carboxylgruppenhaltigen Polyester, mit mittlerem Molekulargewicht Mn von 500 bis 10.000, einer Hydroxylzahl von 20 bis 300 und einer Säurezahl von 1 bis 80, der durch Polykondensation von

    a1) einer Diolkomponente, bestehend aus mindestens einem zweiwertigen aliphatischen oder cycloaliphatischen Alkohol mit 2 bis 12 Kohlenstoffatomen und

    a2) einer Polyolkomponente, bestehend aus mindestens einem aliphatischen oder cycloaliphatischen, mindestens dreiwertigen Alkohol mit 3 bis 8 Kohlenstoffatomen, mit

    b1) einer ersten Dicarbonsäurekomponente, bestehend aus mindestens einer gesättigten, aliphatischen oder cycloaliphatischen Dicarbonsäure und/oder mindestens einem Anhydrid einer derartigen Säure und

    b2) einer zweiten Dicarbonsäurekomponente

hergestellt worden ist, dadurch gekennzeichnet, daß als zweite Dicarbonsäurekomponente b2) mindestens eine olefinisch ungesättigte, aliphatische oder cycloaliphatische Dicarbonsäure mit mindestens 4 Kohlenstoffatomen und/oder mindestens ein Anhydrid einer derartigen Säure in Mengen eingesetzt werden, so daß im resultierenden Polyester B) 3,2 bis 8,5 Gew.-% an über b2) eingebaute olefinische Doppelbindungen (berechnet als $=C=C=$, Molekulargewicht $=24$) vorliegen.

Gegenstand der Erfindung ist auch die Verwendung dieses Beschichtungsmittels zur Herstellung von unter dem Einfluß von Hitze ausgehärteten Beschichtungen auf beliebigen hitzeresistenten Substraten.

Die Bindemittel der erfindungsgemäßen Beschichtungsmittel bestehen aus 2,5 bis 40, vorzugweise 5 bis 30 Gew.-% einer Vernetzerkomponente A) und 97,5 bis 60, vorzugsweise 95 bis 70 Gew.-% einer Polyesterkomponente B), wobei sich die genannten Prozentsätze zu 100 ergänzen.

Die Vernetzerkomponente A) besteht aus mindestens einem Aminoplastharz und/oder mindestens einem blockierten Polyisocyanat.

Als Aminoplastharze sind beispielsweise Melamin-Formaldehyd- oder Harnstoff-Formaldehyd-Kondensationsprodukte anzusehen. Geeignete Melaminharze sind alle herkömmlichen nicht veretherten oder mit gesättigten Monoalkoholen mit 1 bis 4 C-Atomen veretherten Melamin-Formaldehyd-Kondensate, wie sie z.B. in der FR-PS 94 34 11 oder bei D.H. Solomon, The Chemistry of Organic Film Formers, 235 - 240, John Wiley & Sons, Inc., New York, 1967, beschrieben sind. Die Melaminharze können jedoch auch ganz oder teilweise durch andere vernetzende Aminoplasten, wie sie z.B. in "Methoden der Organischen Chemie" (Houben-Weyl), Bd. 14/2, Teil 2, 4. Aufl. Georg Thieme Verlag, Stuttgart, 1963, 319 ff. beschrieben sind, ersetzt werden.

Als blockierte Polyisocyanate sind solche auf Basis aromatischer Polyisocyanate wegen der geforderten extremen Bewitterungsstabilität der erfindungsgemäßen Lackierungen ungeeignet. Erfindungsgemäß kommen vielmehr solche blockierten Polyisocyanate in Betracht, die auf lichtechten, aliphatischen bzw. cycloaliphatischen Polyisocanaten basieren, wie z.B. 1,6-Diisocyanatohexan, 1-Isocyanato-3,3,5-trimethyl-5-isocyanatomethyl-cyclohexan (Isophorondiisocyanat), Cyclohexandiisocyanat, Tetramethylcyclohexandiisocyanat, 4,4'-Diisocyanato-dicylcohexyl-methan, 2,4'-Diisocyanato-di-cyclohexyl-methan usw. bzw. deren Gemische in Betracht. Aber auch daraus hergestellte chemische Modifizierungen mit vorzugsweise Biuretgruppen, Allophanatgruppen, Carbodiimidgruppen, Uretdionstrukturen bzw. Isocyanuratstrukturen können nach reversibler Blockierung der noch freien Isocyanatgruppen als Vernetzungskomponenten eingesetzt werden. Solche isocyanatgruppenaufweisende Basisverbindungen sind beispielsweise in den Patentschriften EP-0 003 505, DE-PS 1 101 394, US-PS 3 358 010, US-PS 3 903 127, US-PS 4 324 879, US-PS 4 288 586, DE-OS 3 100 262, DE-OS 3 100 263, DE-OS 3 033 860 und DE-OS 3 144 672 beschrieben.

Zur Herstellung der reversibel blockierten Polyisocyanatkomponente werden die Basisisocyanate oder Mischungen derselben vorzugsweise mit Blockierungsmitteln wie z.B. $\epsilon$-Caprolactam, Butanonoxim, Acetonoxim, Malonsäurediethylester bzw. Acetessigsäureethylester umgesetzt, so daß im Regelfall eine vollständige Blockierung der freien Isocyanatgruppen erreicht wird.

Die Blockierungsreaktion der freien Isocyanatgruppen mit $\epsilon$-Caprolactam oder Butanononoxim erfolgt bei Temperaturen zwischen vorzugsweise 100 bis 130°C wie z.B. in der DE-OS 3 004 876 beschrieben.

Dabei ist die Anwesenheit von Katalysatoren, z.B. Organozinnverbindungen oder bestimmte tertiäre Amine wie z.B. Triethylendiamin in Mengen zwischen 0,01 bis 0,1 Gew.-%, bezogen auf das Gesamtgemisch, vorteilhaft.

Die Blockierungsreaktion mit Malonsäureestern bzw. Acetessigsäureestern geschieht in an sich bekannter Weise (vgl. DE-OS 2 342 603 oder 2 550 156) mit Hilfe basischer Katalysatoren, wie z.B. Natriumphenolat, Natriummethylat oder andere Alkali-Alkoholate. Auch andere organische Alkali-Verbindungen, wie z.B. Natriummalonat kommen in Betracht. Die Katalysatoren werden in einer Menge von 0,1 % bis 2 %, bezogen auf das Gesamtgewicht der Reaktionskomponenten, eingesetzt. Die Einsatzmenge an Dialkylmalonat sollte mindestens 1 Mol pro Isocyanatäquivalent betragen; es ist jedoch zweckmäßig, einen 5 bis 20 %igen Überschuß an Blockierungsmittel zu verwenden.

Grundsätzlich ist es auch möglich, ein der Definition A) entsprechendes jedoch unblockiertes Polyisocyanat nur teilzublockieren, so daß beispielsweise 40 bis 90 % der Isocyanatgruppen in blockierter Form vorliegen und anschließend das teilblockierte Polyisocyanat mit einem Polyol der als Komponente B geeigneten Art umzusetzen. Die Herstellung von erfindungsgemäßen Kombinationen der Komponenten A) und B) kann analog hierzu, nicht nur wie nachstehend beschrieben durch Abmischen der Einzelkomponenten, sondern auch dergestalt erfolgen, daß man unblockierte Polyisocyanate oder Polyisocyanatgemische teilblockiert, so daß noch beispielsweise bis zu 30 % der NCO-Gruppen in freier Form vorliegen, und anschließend eine solche Menge der als Komponente B) geeigneten, Polyesterpolyole hinzufügt, daß nach der spontan ablaufenden Additionsreaktion zwischen den freien NCO-Gruppen und einem Teil der Hydroxylgruppen des Polyesterpolyols ein Gemisch aus blockierten Polyisocyanaten und überschüssigem Polyesterpolyol B) vorliegt, für welches das Äquivalentverhältnis von blockierten NCO-Gruppen zu Hydroxylgruppen innerhalb des erfindungswesentlichen Bereichs von 0,6 : 1 bis 2 : 1 liegt. In einem solche Falle bestünde die Komponente A) aus besagtem Umsetzungsprodukt zwischen teilblockiertem Polyisocyanat und dem genannten Polyesterpolyol.

Die Blockierungsreaktion kann lösungsmittelfrei oder in Anwesenheit von gegenüber Polyisocyanaten inerten Lösungsmitteln erfolgen.

Als solche kommen beispielsweise in Betracht: Methylglykolacetat, Ethylglykolacetat, Diethylglykolmonomethyletheracetat, Methylethylketon, Methylisobutylketon, Toluol, Xylol sowie die in der Lackchemie üblichen höhersiedenden Kohlenwasserstoffgemische.

Die vorgenannten Lösungsmittel können einzeln oder als Gemische zum Einsatz kommen. Anstelle von Lösungsmitteln ist es auch möglich, Weichmacher zu verwenden, wie z.B. handelsübliche Phosphorsäureester, Phthalsäureester oder Sulfonsäureester.

Blockierte Polyisocyanate, die erfindungsgemäß als Komponente A) eingesetzt werden können, sind im übrigen auch in DE-OS 2 342 603, 2 436 872, 2 550 156, 2 612 783, 2 612 784 oder 2 612 785 beschrieben.

In den erfindungsgemäßen Beschichtungsmitteln können als Komponente A) auch Gemische von blockierten Polyisocyanaten und Aminoplastharzen verwendet werden.

Bei der Komponente B) der erfindungsgemäßen Beschichtungsmittel handelt es sich um Polyester eines mittleren Molekulargewichts $M_n$ von 500 bis 10.000, vorzugsweise 800 bis 5.000, besonders bevorzugt 1.000 bis 3.000, einer Hydroxylzahl von 20 bis 300, vorzugsweise 25 bis 250, besonders bevorzugt von 30 bis 100, sowie einer Säurezahl von 1 bis 80, vorzugsweise 1 bis 30 und besonders bevorzugt von 1 bis 10, die durch Polykondensation der obengenannten Alkoholkomponenten a1) und a2), sowie der obengenannten Säurekomponenten b1) und b2) hergestellt worden sind.

Geeignete zweiwertige, aliphatische und/oder cycloaliphatische Alkohole a1) sind insbesondere solche mit 2 bis 8 Kohlenstoffatomen, wie z.B. Ethylenglykol, Propandiol-1,2 und/oder -1,3, Butandiol-1,2 und -1,4, Pentandiol-1,5, Hexandiol-1,6, Neopentylglykol, Cyclohexandimethanol-1,4 oder Gemische derartiger Diole.

Geeignete höherwertige Alkohole a2) sind insbesondere solche mit 3 - 8 Kohlenstoffatomen, wie z.B. Trimethylolpropan, Glycerin, Pentaerythrit oder Gemische derartiger mehrwertiger Alkohole.

Geeignete gesättigte, aliphatische oder cycloaliphatische Dicarbonsäuren bzw. Dicarbonsäureanhydride b1) sind beispielsweise Oxalsäure, Bernsteinsäure, Glutarsäure, Adipinsäure, Pimelinsäure, Korksäure, Azelainsäure, Hexahydrophthalsäure oder die Anhydride derartiger Säuren bzw. die Gemische derartiger Säuren und/oder Anhydride.

Geeignete ungesättigte, aliphatische bzw. cycloaliphatische Dicarbonsäuren oder deren Anhydride b2) sind beispielsweise Fumarsäure, Maleinsäure, Itaconsäure, Tetrahydrophthalsäure, die Anhydride derartiger Säuren oder die Gemische derartiger Säuren und/oder Anhydride.

Erfindungswesentlich ist die Mitverwendung der zuletztgenannten ungesättigten Aufbaukomponenten, so daß in der resultierenden Polyesterkomponente B) 3,2 bis 8,5 Gew.-% an über diese Komponenten eingebauten olefinischen Doppelbindungen (berechnet als $=C=C=$, Molekulargewicht = 24) vorliegen.

Besonders bevorzugt sind solche Polyester der genannten Art, die durch Umsetzung von 30 - 53 Gew.-Teilen a1), insbesondere 30 - 50 Gew.-Teilen Neopentylglykol und insgesamt 1 bis 3 Gew.-Teilen Propylenglykol (= Propandiol-1,2) und/oder Ethylenglykol, 2 bis 10 Gew.-Teilen a2), insbesondere Trimethylolpropan, 15 -35 Gew.-Teilen b1), insbesondere Adipinsäure und insgesamt 20 - 40 Gew.-Teilen b2), insbesondere bestehend aus Maleinsäure und/oder Tetrahydrophthalsäure und/oder den Anhydriden dieser Säuren, hergestellt worden sind, wobei sich die genannten Gew.-Teile zu 100 ergänzen.

Die Herstellung der Polyester erfolgt in an sich bekannter Weise nach Methoden wie sie beispielsweise in "Ullmanns Encyclopädie der technischen Chemie", Verlag Chemie Weinheim, 4. Auflage (1980), Band 19, Seiten 61 ff, oder von H. Wagner und H. F. Sarx in "Lackkunstharze", Carl Hanser Verlag, München (1971, Seiten 86 bis 152 ausführlich beschrieben sind.

Die Veresterung erfolgt gegebenenfalls in Gegenwart einer katalytischen Menge eines üblichen Veresterungskatalysators wie z.B. Titantetrabutylat bei ca. 80 bis 260° C, vorzugsweise 100 bis 230° C. Die Veresterungsreaktion wird so lange durchgeführt, bis die angestrebten Werte für die Hydroxyl- und Säurezahl erreicht sind.

Die erfindungsgemäßen Polyesterkunstharze weisen ein als Zahlenmittel ($\overline{M}n$) bestimmtes, durch Größenausschlußchromatographie mittels geeichter Polystyrole ermitteltes Molekulargewicht in den angegebenen Grenzen auf.

Zur Herstellung der in den erfindungsgemäßen Beschichtungsmitteln vorliegenden Bindemittel unter ausschließlicher Verwendung von blockierten Polyisocyanaten als Komponente A) werden die Polyisocyanatkomponente A) und die Polyesterkomponente B) abgemischt, und zwar so, daß die Mengenverhältnisse einem Äquivalentverhältnis von blockierten Isocyanatgruppen zu Hydroxylgruppen von 0,6 : 1 bis 2 : 1, vorzugsweise von 0,9 : 1 bis 1,4 : 1, entsprechen. Es ist darauf zu achten, daß beim Vermischen der Komponenten unterhalb der Temperatur gearbeitet wird, bei der die blockierten NCO-Gruppen mit den OH-Gruppen reagieren können.

Wie bereits oben erwähnt, können die erfindungsgemäßen Beschichtungsmittel neben diesen wesentlichen Bindemittelkomponenten A) und B) noch weitere Hilfs- und Zusatzmittel enthalten.

Hierzu gehören beispielsweise andere, nicht der Beschreibung von B) entsprechende, aus der Polyurethanlacktechnologie bekannte organische Polyhydroxylverbindungen, wie beispielsweise die üblichen Polyester-, Polyether- oder vorzugsweise Polyacrylatpolyole, d.h. in Lacklösungsmitteln der auch erfindungsgemäß eingesetzten Art lösliche Copolymerisate von 2-Hydroxyethyl- und/oder 2- bzw. 3-Hydroxypropyl(meth)acrylat mit anderen olefinisch ungesättigten Monomeren bzw. Methylacrylat, Methylmethacrylat, Styrol, Acrylsäure, Acrylnitril, Methacrylnitril oder Gemische derartiger Monomerer. Die Verwendung derartiger, nicht der Definition von B) entsprechender Polyhydroxylverbindungen erfolgt jedoch allenfalls in Mengen von bis 50 Hydroxyläquivalent-%, bezogen auf die Gesamtmenge der in den Beschichtungsmitteln vorliegenden, Hydroxylgruppen aufweisenden Verbindungen. Im Falle der Mitverwendung derartiger Polyhydroxylverbindungen muß selbstverständlich die Menge der Vernetzerkomponente A) innerhalb der oben angegebenen Grenzen entsprechend erhöht werden, insbesondere im Falle der Mitverwendung von blockierten Polyisocyanaten als Komponente A) muß deren Menge so bemessen werden, daß das Äquivalentverhältnis von blockierten Isocyanatgruppen zu Hydroxylgruppen bei mindestens 0,6 : 1 liegt. Die Mitverwendung der, nicht der Definition von B) entsprechenden Polyole ist keineswegs bevorzugt.

Weitere Hilfsmittel sind die üblichen Lösungsmittel eines mindestens bei 75° C liegenden Siedepunkts bzw. eines oberhalb 75° C liegenden Siedebereichs. Die obere Grenze des Siedepunkts bzw. des Siedebereichs der zum Einsatz gelangenden Lösungsmittel ist von den jeweiligen Einbrennbedingungen abhängig. Je höher die Einbrenntemperatur ist, desto höher müssen auch die Siedetemperaturen des zu verwendenden Lösungsmittels liegen. Als Lösungsmittel kommen z.B. folgende in Frage: Aromatische Kohlenwasserstoffe, wie z.B. Toluol, Xylol, Tetralin, Cumol, sowie technische Gemische von Aromaten mit engen Siedeintervallen, z.B. (®)Solvesso 100, 150 und 200 der Fa. Esso, Ketone, wie z.B. Methylisobutylketan, Diisobutylketon, Isophoron und Ester, wie Essigsäure-n-hexylester, Ethylglykolacetat, Ethylacetat, n-Butylacetat oder Gemische derartiger Lösungsmittel.

Die Lösungsmittel können entweder, wie bereits ausgeführt, bereits bei der Herstellung der blockierten Polyisocyanate A) oder auch zu einem beliebigen späteren Zeitpunkt zugesetzt werden. In diesem Zusammenhang muß jedoch hervorgehoben werden, daß die erfindungsgemäßen Beschichtungsmittel für ihr wichtigstes Einsatzgebiet, die Herstellung von hochwetterbeständigen Coil-Coat-Beschichtungen, vorzugsweise in lösemittelarmer Form verarbeitet werden, obwohl grundsätzlich die Mitverwendung hoher Lösemittelmengen nicht ausgeschlosen werden kann. Vorzugsweise weisen demzufolge die erfindungsgemäßen Beschichtungsmittel Festkörpergehalte von mehr als 55 Gew.-% auf.

Weiterer gegebenenfalls in den erfindungsgemäßen Beschichtungsmitteln vorliegende Hilfs- und Zusatzmittel sind beispielsweise Weichmacher der bereits oben beispielhaft genannten Art, Pigmente, Füllstoffe, Verlaufhilfsmittel oder die Vernetzungsreaktion beschleunigender Katalysatoren.

Die Aushärtung von Polyester/Aminoplast-Bindemitteln wird bekanntlich durch Säurezusatz beschleunigt. Bei Verwendung von Polyestern sehr niedriger Säurezahl können den erfindungsgemäßen Überzugsmitteln saure Katalysatoren zugesetzt werden. So wird z.B. die Aushärtung bei Zusatz von 0,5 Gew.-%,

bezogen auf die Summe der Komponenten A) und B), p-Toluolsulfonsäure stark beschleunigt.

Es ist auch möglich, Polyestern niedriger Säurezahl etwa 1 bis 5 Gew.-%, bezogen auf Polyester, eines Anhydrids einer relativ sauren Dicarbonsäure, z.B. Maleinsäureanhydrid, zuzusetzen, um die Säurezahl nachträglich zu erhöhen und so auch ohne Zusatz saurer Katalysatoren die Einbrenntemperaturen zu senken.

Die erfindungsgemäßen Beschichtungsmittel stellen bei Raumtemperatur flüssige und lagerstabile Gemische dar.

Zur Herstellung von Überzügen unter Verwendung der erfindungsgemäßen Beschichtungsmittel werden diese nach an sich bekannten Methoden, beispielsweise durch Spritzen, Tauchen, Fluten oder mit Hilfe von Walzen oder Rakeln auf beliebige hitzeresistente Substrate ein- oder mehrschichtig aufgetragen. Das erfindungsgemäße Beschichtungsmittel eignet sich zur Herstellung von Überzügen auf Metall, Kunststoffen, Holz oder Glas. Besonders gut geeignet ist das erfindungsgemäße Beschichtungsmittel zur Herstellung von Überzügen auf Aluminium und Stahlbändern, die nach dem automatischen Bandlackierverfahren beschichtet werden und als Fahrzeugkarosserien, Gehäuse für Maschinen und Haushaltsgeräte, Verkleidungsblechen, Fässern oder Containern Verwendung finden. Die zu beschichtenden Substrate können vor der Beschichtung mit geeigneten Grundierungen versehen sein. Bei der erfindungsgemäßen Verwendung wird die Menge der eingesetzten erfindungsgemäßen Beschichtungsmittel im allgemeinen so bemessen, daß Trockenschichtdicken von ca. 5 bis 50 $\mu$m vorliegen. Es ist jedoch auch möglich, wesentlich dickere Schichtdikken herzustellen.

Die Aushärtung der erfindungsgemäßen Lacke erfolgt je nach Anwendung in einem Temperaturbereich von 90 - 500° C, vorzugsweise zwischen 110 - 430° C und in einer Zeit von 45 bis 0,25 Minuten, vorzugsweise von 35 bis 0,50 Minuten. Die ausgehärteten Überzüge weisen hervorragende lacktechnische Eigenschaften auf. Sie finden vor allem Anwendung in der Coil-Coating-Lackierung für außenbewitterungsbeständige Ein- und Zweischicht-Lackierungen.

Der erfindungsgemäß erreichbare Oberflächenschutz wird in den nachfolgenden Beispielen demonstriert. Alle Prozentangaben beziehen sich auf Gewichtsprozente.

Beispiele

Beispiel 1

103 g Propandiol-1,2, 2.167 g Neopentylglycol, 273 g Trimethylolpropan und 1.334 g Maleinsäureanhydrid werden in einem 5-l-Rührkessel, der mit einem Rührer, einer Destillationsbrücke und mit einem Stickstoffeinleitungsrohr ausgerüstet ist, eingewogen und auf 125° C erwärmt. Während der Aufheizphase werden das einfache Kesselvolumen Stickstoff/h durchgeleitet. Bei 125° C werden 1.152 g Adipinsäure zugegeben, der Stickstoffdurchsatz auf das doppelte Kesselvolumen/h gesteigert und über einen Zeitraum von sechs Stunden auf 180° C unter Rühren aufgeheizt. Nach ca. 36 h resultieren 4.500 g eines Polykondensationsproduktes mit einer Säurezahl von 5,9 mg KOH/g Harz, einer OH-Zahl von 89 mg KOH/g Harz und einer Hazen-Farbzahl von 40 Apha. 3.150 g dieses Harzes werden in 1.350 g ®Solvesso 100[1] eingebracht. Es resultiert eine Lösung mit einem Feststoffgehalt von 70,0 % und einer Viskosität von 2.144 mPas, gemessen bei 23° C im Rotationsviskositmeter der Fa. Haake (Rotovisko RV 20).

Beispiel 2

Unter den Bedingungen des Beispiels 1 werden 103 g Propandiol-1,2, 2.044 g Neopentylglykol, 387 g Trimethylolpopan, 1.157 g Adipinsäure und 1.340 g Maleinsäureanhydrid polykondensiert. Die resultierende Harzlösung in ®Solvesso 100 hat bei einem Festgehalt von 70,6 % eine Viskosität von 6.454 mPas, eine Säurezahl von 4,1 mg KOH/g, eine OH-Zahl von 63 mg KOH/g und eine Hazen-Farbzahl von 70 Apha.

Vergleichsbeispiel

In einem wie in Beispiel 1 ausgerüsteten 10-l Rührkessel werden 133 g Propandiol-1,2. 2.470 g Neopentylglykol und 646 g Trimethylolpropan zusammen eingewogen und unter Durchleiten von 10 l/h Stickstoff auf 120° C erwärmt. Dann werden unter Rühren 1.495 g Adipinsäure und 2.931 g Isophthalsäure eingewogen und der Ansatz unter Rühren und Stickstoffdurchleitung in 6 h auf 220° C aufgeheizt. Nach dem Erreichen der Säurezahl von 5,6 mg KOH/g und einer Auslaufviskosität von 85 sec (DIN 53211; 4 mm-

[1] ®Solvesso 100 = Handelsprodukt der Fa. Esso

Düse), gemessen 50 %ig in Ethylglykolacetat, wird das Harz in einem Gemisch aus ®Solvesso 100/iso-Butanol im Mischungsverhältnis 9 : 1 bei 60° C gelöst.

Die 65 %ige Harzlösung hat eine Viskosität von 3.670 mPas, eine OH-Zahl von 39 mg KOH/g und eine Iodfarbzahl von 3.

Beispiel 3

Unter den Bedingungen des Beispiels 1 werden 88 g Propandiol-1,2, 1.969 g Neopentylglykol, 137 g Trimethylolpropan, 987 g Adipinsäure und 1.772 g Tetrahydrophthalsäureanhydrid polykondensiert. Nach Lösen von 3.375 g des Harzes in 1.125 g ®Solvesso 100 resultiert eine Harzlösung mit einem Feststoffgehalt von 74,9 %, einer Viskosität von 2.133 mPas, einer Säurezahl von 4,2 mg KOH/g, einer OH-Zahl von 60 mg KOH/g und einer Hazen-Farbzahl von 30 Apha.

Beispiel 4

Unter den Bedingungen des Beispiels 1 werden 103 g Propandiol-1,2, 2.305 g Neopentylglykol, 161 g Trimethylolpropan, 998 g Adipinsäure und 1.444 g Maleinsäureanhydrid polykondensiert. Nach Lösen von 3.375 g des Harzes in 1.125 g ®Solvesso 100 resultiert eine Harzlösung mit einem Feststoffgehalt von 74,7 %, einer Viskosität von 2.660 mPas, einer Säurezahl von 4,3 mg KOH/g, einer OH-Zahl von 68 mg KOH/g und einer Hazen-Farbzahl von 35 Apha.

Beispiel 5 (Verwendung)

Dieses Beispiel beschreibt die Herstellung gebrauchsfertiger Lacke auf Basis der Polyesterpolyole gemäß Beispiel 1 bis 4, und des Vergleichsbeispiels, deren Applikation und die Prüfung der resultierenden Lackfilme.

Zur Beurteilung der allgemeinen Lackeigenschaften wurden Weißlacke hergestellt; dabei wurden die Polyesterpolyole aus den Beispielen 1 bis 4 und des Vergleichsbeispiels mit verschiedenen Zusätzen sowie Weißpigment versehen.

Anschließend wurde mit einem blockierten, lichtechten Lackisocyanat versetzt, wobei ein NCO/OH-Verhältnis von ca. 1 : 1 eingehalten wurde. Als "blockiertes Lackpolyisocyanat" diente einmal eine 75 %ige Lösung in ®Solvesso 100 eines durch Trimerisierung von Hexamethylendiisocyanat hergestellten und mit Butanonoxim blockierten, Isocyanuratgruppen aufweisenden Polyisocyanats mit einem Gehalt der Lösung an verkappten NCO-Gruppen (berechnet als NCO, Molekulargewicht = 42) von 11,1 % ( = BL I) und ausserdem eine 65 %ige Lösung in ®Solvesso 100 eines durch Trimerisierung von Isophorondiisocyanat (IPDI) hergestellten und mit Butanonoxim blockierten Isocyanuratgruppen aufweisenden Polyisocyanats mit einem NCO-Gehalt der Lösung von 8,1 % ( = BL II).

Bezogen auf Festharz (Summe der festen Anteile an Polyol und Polyisocyanat) wurden folgende Anteile an Zusatzstoffen verwendet:

Tabelle 1

| Bestandteile | Gew.-% fest auf fest |
|---|---|
| Dibutylzinndilaurat[1] als Katalysator 10 %ig in Solvesso 200 | 1,0 |
| (®)Celluloseacetobutyrat CAB 531-1[2] 10 %ig in Solvesso 200/Butyldiglykol 2 : 1 | 2,4 |
| (®)Acronal 4 F[3] als Verlaufsmittel; 50 %ig in Solvesso 200 | 2,4 |
| Titandioxid (Rutiltyp; ®Bayertitan R-KB-4) wurde bezogen auf den festen Bindemittelanteil ( = Summe aus Polyesterpolyol und blockiertem Polyisocyanat) im Verhältnis 1:1 zugesetzt und alles zusammen auf der Perlmühle homogenisiert. | |

[1] Oxydo GmbH, Emmerich
[2] Krahn Chemie, Hamburg
[3] BASF AG Ludwigshafen

Der entstehende Weißlack wurde durch Zusatz von ®Solvesso 200 auf eine Auslaufviskosität im 4 mm-DIN-Becher (DIN 53 211) von ca. 70 Sekunden verdünnt, in einer Naßfilmschichtdicke von ca. 40 - 50 $\mu$m

auf zuvor grundierte Aluminiumbleche (68 mm x 150 mm) ®Alodine 1200 = Bleche der Fa. Henkel-Technimetal, Köln aufgezogen und im Einbrennumluftofen bei 300° C Ofentemperatur ($\hat{=}$ ca. 232 - 241°C mittlere Objekttemperatur) über einen Zeitraum von 55 - 60 Sekunden eingebrannt und sofort im lauwarmen Wasser abgekühlt. Anschließend wurde die Buchholzhärte (DIN 53 153, ECCA*T 12), der Glanz nach Gardner im 20°- und 60°-Winkel (DIN 67 530, ECCA*T 2), der Weißgrad (DIN 6174, ECCA*T 3), die Lösemittelbeständigkeit mit dem MEK-Wischtest (NCCA*Norm II-15, 2 kg Belastung), die Haftung mittels Gitterschnitt und 6 mm-Tiefung (DIN 53 151, ECCA*T 6) und Schlagprüfung (DIN 55 669, ECCA*T 5), die Elastizität (T-bend-Test nach NCCA*-Norm II-19), sowie die Abriebbeständigkeit (DIN 53 754; 500 Zyklen, 500 g Belastung, CS-10 Steine) bestimmt.

*ECCA = European-Coil Coating Association

*NCCA = National-Coil Coating Association (USA)

Es ergeben sich die in Tabelle 2 aufgelisteten Werte.

Tabelle 2

| Beispiele | 1 BL 1 | 1 BL II | 2 BL I | 2 BL II | 3 BL II | 4 BL I | 4 BL II | Vergleichsbeispiel BL I | Vergleichsbeispiel BL II |
|---|---|---|---|---|---|---|---|---|---|
| Vernetzungskomponente BL 1 | | | | | | | | | |
| NCO/OH | 1 | 1 | 1 | 1 | 1 | 1 | 1 | 1 | 1 |
| Buchholzhärte | 81 | 94 | 83 | 80 | 73 | 72 | 86 | 94 | 91 |
| Glanz 20°/60°-Winkel | 56/70 | 63/73 | 58/74 | 69/81 | 76/88 | 56/79 | 76/87 | 58/79 | 78/87 |
| Weißgrad | 89 | 89,9 | 89,4 | 89,7 | 84,1 | 86,4 | 88,2 | 88,1 | 87,9 |
| MEK-Wischtest | > 100 | > 100 | > 100 | > 100 | > 100 | > 100 | > 100 | > 100 | > 100 |
| Haftung nach 6 mm-Erichsendehnung | 0 | 0 | 0 | 0 | 0 | 0 | 0 | 0 | 0 |
| Schlagelastizität | 80 | 80 | 80 | 80 | 80 | 80 | 80 | 70 | 10-Risse |
| T-bend-Test* T 0 | R1HO | R1HO | R1HO | ROHO | ROHO | R1HO | R1HO | R4HO | R5H3 |
| T 1 | ROHO | ROHO | ROHO | | | ROHO | ROHO | R3HO | R5H3 |
| T 2 | | ROHO | | | | | | R1HO | R5H1 |
| T 3 | | | | | | | | ROHO | R5HO |
| T 4 | | | | | | | | | R5HO |
| T 5 | | | | | | | | | R5HO |
| mg Abrieb**: 1. Messung | 8,5 | | 2,7 | | | 10,3 | | 20,2 | |
| 2. Messung | 5,5 | | 3,1 | | | 9,8 | | 21,1 | |

*Reihenfolge RO(HO) = bester Wert
R5(H5) = schlechtester Wert
R = Rißbildung
H = Haftung

**Gewichtsverlust nach 500 Zyklen, 500 g Belastung, CS 10-Steine

Zur Prüfung der Wetterbeständigkeit von Beschichtungen werden oft Kurzbewitterungstest durchgeführt, um schneller vergleichende Beurteilungen zu ermöglichen. Hierzu werden die Proben einer intensiven Strahlungs- und Feuchtigkeitsbelastung ausgesetzt, die nur wenige Materialien ohne Schädigung überstehen. Da gute Ergebnisse bei diesen Tests aber heute zunehmend gefordert werden, war es Ziel der vorliegenden Entwicklung, mittels geeigneter neuartiger Polyesterpolyole zu Lacken zu gelangen, die neben allgemein hohem Eigenschaftsniveau (Elastizität, Glanz, Haftung, Abriebfestigkeit, Chemikalienbeständigkeit etc.) eine deutlich verbesserte Beständigkeit in der Kurzbewitterung gegenüber vergleichbaren Beschichtungen aufweisen.

Vorrangig war hier die Erzielung einer hohen Vergilbungsresistenz bei Bestrahlung mit kurzwelligem UV-Licht im QUV-Test (QUV Accelerated Weathering Tester; Prüfung nach ASTM G 53-77).

Hierzu wurden auf Aluminiumbleche (68 mm x 150 mm), die zuvor mit weißem Basislack beschichtet wurden, Klarlacke auf Basis des Polyesterpolyols des Beispiels 1 sowie des Vergleichsbeispiels appliziert. Zur Herstellung derselben wurden in der Formulierung die Anteile der Tabelle 1 mit Ausnahme von DBTL sowie das Weißpigment weggelassen und das Bindemittel, bestehend aus Polyesterpolyol und blockiertem Polyisocyanat (BL II) mittels ®Solvesso 200 auf 70 Sekunden Auslaufviskosität eingestellt, auf die vorbehandelten Aluminiumbleche aufgetragen (Schicht dicke ca. 25 µm) und im Umluftofen bei einer Ofentemperatur von 300° C in ca. 55 Sekunden eingebrannt. Die Prüfung der Wetterbeständigkeit der lackierten Bleche erfolgte anschließend im QUV-Gerät der. Fa. Q-Panel Company.

Dabei wurde im Zyklus jeweils 4 h mit intensivem, ungefiltertem UV-Licht im Wellenlängenbereich von ca. 275 bis 370 nm (Maximum bei 313 nm) bestrahlt bzw. 4 h im Dunkeln betaut, bei einer Gesamtdauer von 700 h. Nach dem Abwaschen der Proben wird mittels eines Farbmeßgerätes die Gesamtfarbdifferenz ΔE (gegenüber der nicht bewitterten Platte) als Maß für die aufgetretene Vergilbung bestimmt.

Dabei ergaben sich folgende Werte für die Vergilbung und Rißbildung der beschichteten Bleche:

Tabelle 3

| Zeitdauer (h) | 100 | 300 | 500 | 700 |
|---|---|---|---|---|
| Gesamtfarbdifferenz (ΔE) Beispiel 1 | 4,0 | 4,1 | 4,3 | 4,3 |
| Gesamtfarbdifferenz (ΔE) Vergleichsbeispiel | 3,0 | 8,9 | 10,2 | 10,6 |
| Rißbildung Beispiel 1 | RO | RO | RO | RO |
| Rißbildung Vergleichsbeispiel | RO | R1 | R3 | R4 |
| Rißbildung:<br>RO - keine Risse<br>R1 - wenige Risse<br>R5 - übersät mit Rissen | | | | |

Diskussion der Ergebnisse:

Rißbildung, Kreidung, Blasen- oder Fleckenbildung trat bei keiner der erfindungsgemäßen Kombinationen auf.

Die Ergebnisse der Farbenmessungen machen insbesondere die ganz ausgezeichnete UV-Beständigkeit der erfindungsgemäßen Lacke im Unterschied zu den Vergleichslacken deutlich.

Auch die Weißlacke des Beispiels 1 und des Vergleichsbeispiels, deren lacktechnische Prüfergebnisse in Tabelle 2 wiedergegeben sind, wurden auf ihre Wetterbeständigkeit untersucht. Dabei ergaben sich nach QUV-belastungen die folgenden Werte:

## Tabelle 4

| Zeitdauer (h) | | 250 | 500 | 750 | 1000 | 1250 |
|---|---|---|---|---|---|---|
| Gesamtfarbdifferenzen Kreidungsstufen: | | | | | | |
| Beispiel 1/BL I | $\Delta E =$ | 0,7 | 1,0 | | 1,5 | 1,1 |
| | K = | | | | | 1 |
| Vergleichsbeispiel BL I | $\Delta E =$ | 0,5 | 0,9 | 1,0 | | 1,2 |
| | K = | | 1 | 3-4 | 5 | 5 |
| Beispiel 1/BL II | $\Delta E =$ | 0,5 | | | 0,8 | 1,1 |
| | K = | | | | | 0 |
| Vergleichsbeispiel BL II | $\Delta E =$ | 0,7 | 1,2 | | | 1,1 |
| | K = | | 1 | 1-2 | 4 | 5 |

Kreidungsstufen: 0 = bester Wert  
5 = schlechtester Wert

Auch die pigmentierten Lackfilme zeigen für das erfindungsgemäße Beispiel die im Vergleich zum Stand der Technik deutliche Verbesserung der Belastungsfähigkeit bei UV-Bestrahlung, was sich insbesondere in der überlegenen Kreidungsresistenz wiederspiegelt.

Beispiel 6 (Verwendung)

Die Herstellung der Weißlacke erfolgt analog Beispiel 6 mit der Maßgabe, daß als Vernetzer hier kein blockiertes Polyisocyanat, sondern ein methanolverethertes Melaminharz (®Cymel 303 = Handelsprodukt der Fa. American Cyanamid) zugesetzt wurde. Das Bindemittel Vernetzerverhältnis beträgt 9 : 1, bezogen auf die Festharzbestandteile.

Die Applikation auf Aluminiumbleche und die Einbrennbedingungen entsprechen den Bedingungen des Beispiels 6.

Die Tabellen 5 und 6 enthalten lacktechnische Prüfdaten und Bewitterungsergebnisse für das Beispiel 1 im Vergleich zum Stand der Technik (Vergleichsbeispiel).

Tabelle 5

| | | Beispiel 1 | Vergleichsbeisp. |
|---|---|---|---|
| Vernetzungskomponente | | Cymel 303 90:10 | Cymel 303 90:10 |
| Buchholzhärte | | 85 | 76 |
| Glanz 20°/60°-Winkel | | 67/81 | 65/76 |
| Weißgrad | | 88,0 | 85,8 |
| MEK-Wischtest | | > 100 | > 100 |
| Haftung | | 0 | 0 |
| Schlagelastizität | | 80 | 80 |
| T-bend-Test | T 0 | R1 HO | R4 H5 |
| | T 1 | RO HO | R1 H1 |
| | T 2 | | RO RO |
| mg Abrieb | Wert 1 | 4,2 | 33,3 |
| | Wert 2 | 4,3 | 34,5 |

## Tabelle 6

```
Zeitdauer (h)            250   500   750   1000  1250  1500

Gesamtfarbdifferenz (ΔE)
Beispiel 1               0,2   0,6                     0,8
Vergleichsbeispiel       0,2   0,7         0,9   1,1

Kreidungsstufe (K0-K5)
Beispiel 1                                             KO
Vergleichsbeispiel             KO-1  K5                K5

Glanzgrad 20⁰/60⁰-Winkel
Beispiel 1          20⁰ < 50   60         65   55 - 45   40
Vergleichsbeispiel  20⁰ < 55   92 < 60⁰/67 62   40       30
```

Auch beim Vergleich der lacktechnischen Eigenschaften und der UV-Beständigkeit wird die Überlegenheit der erfindungsgemäßen Polyesterkomponenten im Vergleich zum Stand der Technik auch bei Vernetzung mit Melaminharzen deutlich. Besonders hervorzuheben sind die ausgewogene Härte/Elastizitätsrelation und die hohe Abriebfestigkeit sowie die Glanz- und Kreidungsresistenz bei UV-Bestrahlung.

**Patentansprüche**

1. Bei Raumtemperatur lagerstabiles, flüssiges Beschichtungsmittel, bestehend im wesentlichen aus einem Bindemittelgemisch, organischen Lösungsmitteln und gegebenenfalls den aus der Lacktechnologie üblichen Hilfs- und Zusatzmitteln, wobei das Bindemittel ein Gemisch darstellt aus

A) 2,5 - 40 Gew.-%, bezogen auf die Summe der Komponenten A) und B), einer Vernetzerkomponente, bestehend aus mindestens einem Aminoplastharz und/oder mindestens einem blockierten Polyisocyanat, und

B) 97,5 - 60 Gew.-%, bezogen auf die Summe der Komponenten A) und B), einer Polyesterkomponente, bestehend aus mindestens einem hydroxyl- und carboxylgruppenhaltigen Polyester, mit mittlerem Molekulargewicht Mn von 500 bis 10.000, einer Hydroxylzahl von 20 bis 300 und einer Säurezahl von 1 bis 80, der durch Polykondensation von

EP 0 494 442 B1

a1) einer Diolkomponente, bestehend aus mindestens einem zweiwertigen aliphatischen oder cycloaliphatischen Alkohol mit 2 bis 12 Kohlenstoffatomen und

a2) einer Polyolkomponente, bestehend aus mindestens einem aliphatischen oder cycloaliphatischen, mindestens dreiwertigen Alkohol mit 3 bis 8 Kohlenstoffatomen,

mit

b1) einer ersten Dicarbonsäurekomponente, bestehend aus mindestens einer gesättigten, aliphatischen oder cycloaliphatischen Dicarbonsäure und/oder mindestens einem Anhydrid einer derartigen Säure und

b2) einer zweiten Dicarbonsäurekomponente

hergestellt worden ist, dadurch gekennzeichnet, daß als zweite Dicarbonsäurekomponente b2) mindestens eine olefinisch ungesättigte, aliphatische oder cycloaliphatische Dicarbonsäure mit mindestens 4 Kohlenstoffatomen und/oder mindestens ein Anhydrid einer derartigen Säure in Mengen eingesetzt werden, so daß im resultierenden Polyester B) 3,2 bis 8,5 Gew.-% an über b2) eingebaute olefinische Doppelbindungen (berechnet als $=C=C=$, Molekulargewicht $=24$) vorliegen.

2. Beschichtungsmittel gemäß Anspruch 1, dadurch gekennzeichnet, daß die Komponente B) eine Hydroxylzahl von 30 bis 100, eine Carboxylzahl von 1 bis 10 und ein mittleres Molekulargewicht Mn von 1.000 bis 3.000 aufweist, wobei bei der Herstellung der Polyesterkomponente 30 bis 50 Gewichtsteile Neopentylglykol, insgesamt 1 bis 3 Gewichtsteile Ethylenglykol oder Propylenglykol-1,2, 2 bis 10 Gewichtsteile Trimethylolpropan, 15 bis 35 Gewichtsteile Adipinsäure und insgesamt 20 bis 40 Gewichtsteile Maleinsäure und/oder Tetrahydrophthalsäure oder eine entsprechende Menge der entsprechenden Anhydride zum Einsatz gelangten, wobei sich die genannten Gewichtsteile zu 100 ergänzen.

3. Verwendung der Beschichtungsmittel gemäß Anspruch 1 und 2, zur Herstellung von unter dem Einfluß von Hitze ausgehärteten Beschichtungen auf beliebigen hitzeresistenten Substraten.

## Claims

1. A coating composition which is liquid and storable at room temperature, consisting essentially of a binder mixture, organic solvents and, optionally, the auxiliaries and additives typically used in lacquer technology, the binder being a mixture of

   A) 2.5 to 40% by weight, based on the sum of components A) and B), of a crosslinking component consisting of at least one amino resin and/or at least one blocked polyisocyanate and

   B) 97.5 to 60% by weight, based on the sum of components A) and B), of a polyester component consisting of at least one hydroxyl- and carboxyl-functional polyester with an average molecular weight Mn of 500 to 10,000, a hydroxyl value of 20 to 300 and an acid value of 1 to 80 which has been prepared by polycondensation of

   a1) a diol component consisting of at least one dihydric aliphatic or cycloaliphatic $C_{2-12}$ alcohol and

   a2) a polyol component consisting of at least one aliphatic or cycloaliphatic, at least trihydric $C_{3-8}$ alcohol with

   b1) a first dicarboxylic acid component consisting of at least one saturated, aliphatic or cycloaliphatic dicarboxylic acid and/or at least one anhydride of such an acid and

   b2) a second dicarboxylic acid component,

   characterized in that the second dicarboxylic acid component b2) consists of at least one olefinically unsaturated, aliphatic or cycloaliphatic dicarboxylic acid containing at least 4 carbon atoms and/or at least one anhydride of such an acid in such quantities that 3.2 to 8.5% by weight of olefinic double bonds (expressed as $=C=C=$, molecular weight $= 24$) incorporated through b2) are present in the resulting polyester B).

2. A coating composition as claimed in claim 1, characterized in that component B) has a hydroxyl value of 30 to 100, a carboxyl value of 1 to 10 and an average molecular weight Mn of 1,000 to 3,000, 30 to 50 parts by weight of neopentyl glycol, a total of 1 to 3 parts by weight of ethylene glycol or 1,2-propylene glycol, 2 to 10 parts by weight of trimethylol propane, 15 to 35 parts by weight of adipic acid and a total of 20 to 40 parts by weight of maleic acid and/or tetrahydrophthalic acid or a corresponding quantity of the corresponding anhydrides being used in the production of the polyester component, the parts by weight mentioned adding up to 100.

13

3. The use of the coating compositions claimed in claims 1 and 2 for the production of heat-cured coatings on heat-resistant substrates.

**Revendications**

1. Agent de revêtement liquide stable au stockage à température ambiante, composé principalement d'un mélange de liants, de solvants organiques et, éventuellement, des agents auxiliaires et additifs employés habituellement dans les peintures, le liant étant constitué d'un mélange de

A) 2,5 - 40 % en poids, par rapport à la somme des composants A) et B), d'un composant de réticulation, constitué d'au moins une résine aminoplaste et/ou au moins un polyisocyanate bloqué, et

B) 97,5 - 60 % en poids, par rapport à la somme des composants A) et B), d'un composant polyester, constitué d'au moins un polyester contenant des groupes hydroxyle et carboxyle, d'un poids moléculaire moyen Mn de 500 à 10.000, d'un indice d'hydroxyle de 20 à 300 et d'un indice d'acidité de 1 à 80, qui est fabriqué par polycondensation

a1) d'un composant diol, constitué d'au moins un alcool aliphatique ou cycloaliphatique bivalent comprenant de 2 à 12 atomes de carbone, et

a2) d'un composant polyol, constitué d'au moins un alcool aliphatique ou cycloaliphatique au moins trivalent comprenant de 3 à 8 atomes de carbone, avec

b1) un premier composant diacide carboxylique, constitué d'au moins un diacide carboxylique saturé, aliphatique ou cycloaliphatique et/ou au moins un anhydride d'un tel acide et

b2) un deuxième composant diacide carboxylique,

caractérisé en ce qu'au moins un diacide carboxylique oléfinique insaturé, aliphatique ou cycloaliphatique comportant au moins 4 atomes de carbone et/ou au moins un anhydride d'un tel acide est utilisé comme deuxième composant diacide carboxylique b2) en quantités telles que le polyester résultant B) présente 3,2 à 8,5 % en poids de liaisons doubles oléfiniques (calculées comme $=C=C=$, poids moléculaire $= 24$) introduites par b2).

2. Agent de revêtement selon la revendication 1, caractérisé en ce que le composant B) présente un indice hydroxyle de 30 à 100, un indice carboxyle de 1 à 10 et un poids moléculaire moyen Mn de 1.000 à 3.000, étant entendu que lors de la fabrication des composants polyesters, sont utilisées 30 à 50 parties en poids de néopentylglycol, au total 1 à 3 parties en poids d'éthylèneglycol ou de 1,2--propylèneglycol, 2 à 10 parties en poids de triméthylolpropane, 15 à 35 parties en poids d'acide adipique et au total 20 à 40 parties en poids d'acide maléique et/ou d'acide tétrahydrophtalique ou une quantité correspondante des anhydrides correspondants, les quantités en poids se complétant pour donner 100.

3. Utilisation des agents de revêtement selon les revendications 1 et 2 pour la fabrication de revêtements durcis sous l'influence de la chaleur sur des substrats quelconques résistant à la chaleur.